# EUROPÄISCHE PATENTANMELDUNG

(11) **EP 1 266 781 A1**
(43) Veröffentlichungstag der Anmeldung: **18.12.2002**
(21) Anmeldenummer: 02012014.3
(22) Anmeldetag: 31.05.2002
(51) Int. Cl.: B60J 7/04, B60J 7/22

(54) **Fahrzeugdach mit einer Dachöffnung und einem bewegbaren Deckel**

(30) Priorität: 12.06.2001 DE 10128285
(71) Anmelder: Webasto Vehicle Systems International GmbH, 82131 Stockdorf (DE)
(72) Erfinder: Gaillard de, François, 85390 Mouilleron en pareds (FR); Waal de, Frank Martin, 1566 TS Assendelft (NL); Righetti, Ivano Claudio, 10139 Torino (IT)
(74) Vertreter: Konnerth, Dieter Hans

(57) **Zusammenfassung**

Die Erfindung betrifft eine Fahrzeugdach (2) mit einer Dachöffnung (4) und einem bewegbaren Deckel (5) zum wahlweisen Schließen oder zumindest teilweisen Freigeben der Dachöffnung (4), wobei zur Verbesserung der Aufhellung des Fahrzeuginnenraumes eine längliche Dachöffnung (4) vorgesehen ist und der Deckel (5) zur Bewegung in Fahrzeugquerrichtung zwischen seiner Schließstellung in der Dachöffnung (4) und seiner Offenstellung unter einem an die Dachöffnung (4) seitlich angrenzenden Dachabschnitt (11) gelagert ist und eine Luftleiteinrichtung (19) in der geöffneten Dachöffnung (4) beabstandet vom Vorderrand (21) der Dachöffnung (4) positionierbar ist, so daß die Strömungsverhältnisse bei freigegebener Dachöffnung verbessert sind.

## Beschreibung

Die Erfindung betrifft ein Fahrzeugdach mit einer Dachöffnung und einem bewegbaren Deckel zum wahlweisen Schließen oder zumindest teilweisen Freigeben der Dachöffnung.

Aus der DE 199 14 427 A1 ist ein Fahrzeugdach bekannt, das einen festen Dachabschnitt und wenigstens zwei nebeneinander angeordnete und in Fahrzeugquerrichtung unter die seitlichen festen Dachabschnitte verschiebbar angeordnete Dachteile aufweist. Sowohl die verschiebbaren Dachteile wie auch die festen Dachabschnitte sind zumindest teilweise lichtdurchlässig. Die freilegbare Dachöffnung nimmt einen überwiegenden Anteil der Dachfläche in Querrichtung ein. Zusammen mit den seitlichen Dachabschnitten ist ein sehr breiter lichtdurchlässiger Bereich gebildet. Der großflächige Lichteinfall kann, insbesondere bei direkter Sonneneinstrahlung, von den Fahrzeuginsassen auch als negativ empfunden werden, so daß vergleichsweise große Abschattungseinrichtungen erforderlich sind. Sind die lichtdurchlässigen Teile des Fahrzeugdachs aus Glasteilen gebildet, so weist das Fahrzeugdach demzufolge ein hohes Gewicht auf. Wenn die Dachöffnung freigelegt ist, kann aufgrund ihrer großen Länge unerwünschter Luftzug im Fahrzeuginnenraum auftreten.

Aufgabe der Erfindung ist es, ein eingangs genanntes Fahrzeugdach mit einer durch einen Deckel verschließbaren Dachöffnung zu schaffen, das eine verbesserte Innenraumausleuchtung bereitstellt und bei geöffneter Dachöffnung im Fahrbetrieb weitgehend zugfrei ist.

Diese Aufgabe wird bei dem oben genannten Fahrzeugdach erfindungsgemäß dadurch gelöst, daß der Deckel zur Bewegung in Fahrzeugquerrichtung zwischen seiner Schließstellung in der Dachöffnung und seiner Offenstellung unter einem an die Dachöffnung seitlich angrenzenden Dachabschnitt gelagert ist und daß eine Luftleiteinrichtung in der geöffneten Dachöffnung beabstandet vom Vorderrand der Dachöffnung positionierbar ist. Ein derart gebildetes Fahrzeugdach, dessen Dachöffnung aufgrund der Querverschiebung des Deckels eine längliche schmale Form aufweisen kann, bietet einen großzügig bemessenen Lichteinfall über einen mittigen länglichen Bereich in den Innenraum, wobei dieser Lichteinfall im wesentlichen zwischen Fahrer und Beifahrer erfolgt, die ihrerseits unter den lichtundurchlässigen Randabschnitten des Fahrzeugdaches weitgehend gegen direkte blendende Sonneneinstrahlung geschützt sind, bzw. bei einem vier- oder fünfsitzigen Personenkraftwagen auch in einem Bereich zwischen zwei im Fond sitzenden Insassen, die durch den länglichen mittigen Deckel, wenn dieser durchsichtig gebildet ist, jedoch eine wesentlich verbesserte freie Sicht nach oben erhalten. Um das Luftströmungsverhalten bei einer derartigen langen Dachöffnung im Fahrbetrieb zu verbessern, kann die erfindungsgemäß vorgesehene Luftleiteinrichtung bedarfsweise in der geöffneten Dachöffnung angeordnet werden, wobei die Luftleiteinrichtung im Gegensatz zu üblichen Windabweisern, die stets am Vorderrand der Dachöffnung angebracht sind, in größerem Abstand zum Vorderrand der Dachöffnung angeordnet sind und an ihrer Position eine wirkungsvolle Strömungsbeeinflussung ermöglicht.

Vorteilhafte Ausgestaltungen der Erfindung sind in den Unteransprüchen angegeben.

In einer besonders vorteilhaften Ausbildung des Fahrzeugdaches weist der jeweilige seitliche lichtundurchlässige Dachabschnitt des Fahrzeugdaches zumindest die Breite der Dachöffnung auf. So kann die Breite der Dachöffnung in etwa ein Drittel der Breite des Fahrzeugdaches betragen. Hierbei ergibt sich ein guter Kompromiß zwischen der Größe des Lichteintrittsbereiches und der aus Komfortgründen abgeschatteten seitlichen Bereiche. Die Länge der Dachöffnung beträgt zweckmäßigerweise zumindest das Zweifache und insbesondere das Drei- bis Vierfache ihrer Breite.

Gemäß einer bevorzugten Ausgestaltung ist vorgesehen, daß eine luftdurchlässige Sonnenschutzeinheit aus ihrer Außergebrauchstellung unter einem an die Dachöffnung seitlich angrenzenden Dachabschnitt in die freigelegte Dachöffnung bewegbar ist. Die luftdurchlässige Sonnenschutzeinheit weist beispielsweise eine Netzstruktur auf und wird unter der Luftleiteinrichtung angeordnet, so daß eine Abschattung des Bereichs unter der Dachöffnung bei weiterhin möglicher Belüftung und vorteilhaft geleiteter Luftströmung erzielt wird.

Zweckmäßigerweise ist die Luftleiteinrichtung ein die Luftströmung leitender insbesondere lamellen- oder schildförmiger Windabweiser, der eben, gekrümmt oder auch pfeilförmig sein kann. Die Luftleiteinrichtung kann unabhängig von der Sonnenschutzeinheit bewegbar sein, beispielsweise mittels einer Lagerung an einer Führungsschiene verschiebbar gelagert sein, oder auch mit der Sonnenschutzeinheit verbunden und zur Vereinfachung der Betätigung gemeinsam mit dieser bewegbar sein. Die Sonnenschutzeinheit kann auch an der Führungsschiene verschiebbar gelagert sein.

Um das optische Erscheinungsbild möglichst unauffällig zu halten, kann die Luftleiteinrichtung aus transparentem Material hergestellt sein.

Um eine möglichst wirkungsvolle Luftströmungsleitung zu erreichen, kann die Luftleiteinrichtung in einem festgelegten Abstand vom Vorderrand der Dachöffnung und insbesondere nach 1/3 der Länge der Dachöffnung angeordnet sein.

Des weiteren kann die Luftleiteinrichtung in ihrer Neigung zum Beeinflussen der Luftströmung einstellbar sein.

Des weiteren kann eine in Querrichtung bewegbare zusätzliche Sonnenschutzeinheit aus ihrer Außergebrauchstellung unter dem seitlichen Dachabschnitt unter den in der Dachöffnung angeordneten transparenten Deckel verschiebbar sein. Zweckmäßigerweise sind dann die beiden Sonnenschutzeinheiten an einer Baueinheit rechts bzw. links der Dachöffnung in Außergebrauchstellung gelagert.

Zweckmäßigerweise sind der Deckel und die Sonnenschutzeinheiten an der Baueinheit gelagert und vormontiert. Diese Baueinheit wird bei der Montage von unten an das Fahrzeugdach eingesetzt und daran befestigt.

Nachfolgend wird ein Ausführungsbeispiel des Fahrzeugdachs unter Bezugnahme auf die Zeichnungen näher erläutert. Es zeigt:
- Fig. 1: in einer perspektivischen Draufsicht ein Personenkraftwagen mit einem erfindungsgemäßen Fahrzeugdach mit einer länglichen Dachöffnung und einer darin angeordneten Luftleiteinrichtung;
- Fig. 2: in einer perspektivischen Draufsicht eine den Deckel, die Luftleiteinrichtung und ein Sonnenschutzteil enthaltende Baueinheit; und
- Fig. 3: in einer Querschnittansicht durch das Fahrzeugdach entlang der Linie A ― A in Fig. 2 die Luftleiteinrichtung und die Sonnenschutzeinrichtung.

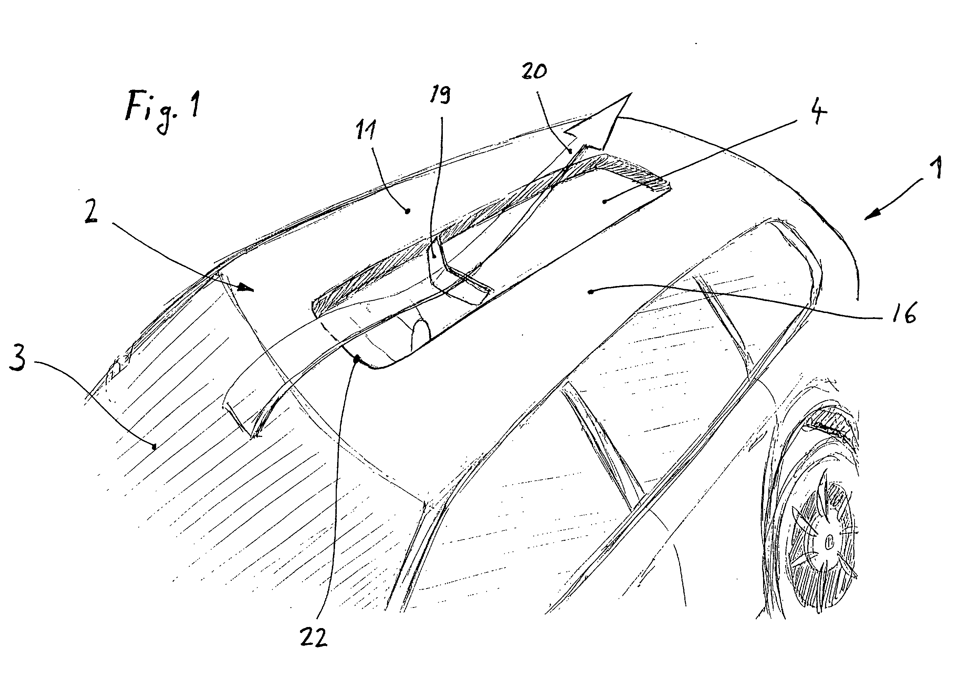

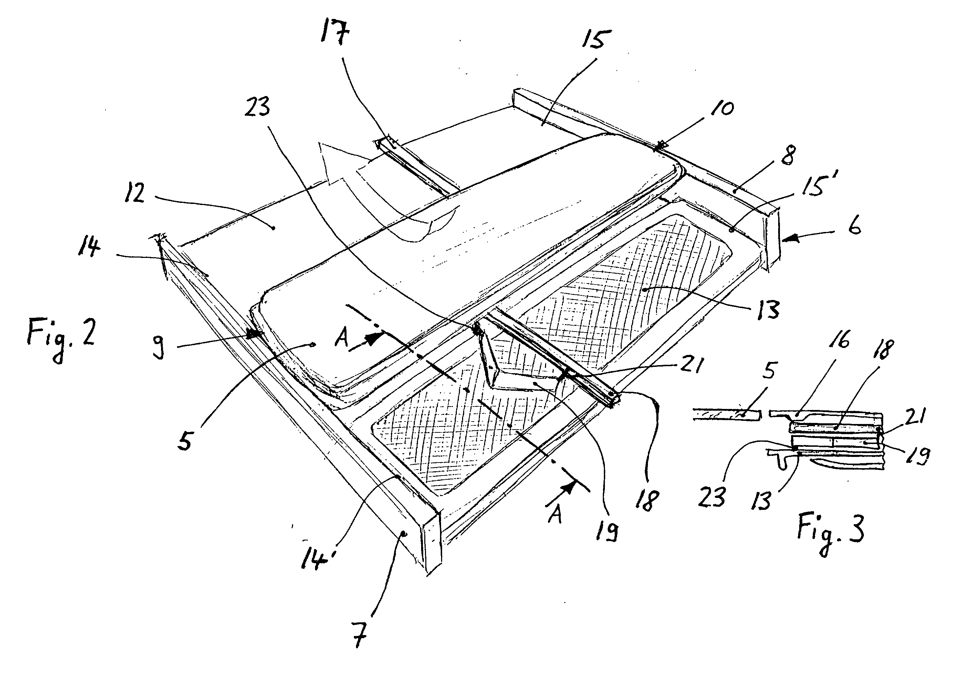

Ein Fahrzeug 1, beispielsweise ein viertüriger Personenkraftwagen (siehe Fig. 1), enthält ein festes Fahrzeugdach 2, das sich anschließend an eine Windschutzscheibe 3 über den Fahrzeuginnenraum erstreckt. In dem Fahrzeugdach 2 ist eine Dachöffnung 4 gebildet, die mittels eines bewegbaren Deckels 5 (siehe Fig. 2), der aus transparentem Material hergestellt ist und insbesondere ein Glasdeckel ist, verschließbar ist. Die Dachöffnung 4 hat eine längliche schmale Form und erstreckt sich in der Mitte des Fahrzeugdaches 2 in Längsrichtung. Die Breite der Dachöffnung 4 beträgt beispielsweise etwa 25 bis 30% der Breite des Fahrzeugdaches 2. Die Länge der Dachöffnung 4 beträgt beispielsweise etwa das Zwei- bis Fünffache ihrer Breite und kann bedarfsweise in Abhängigkeit von der Größe bzw. der Länge des Fahrzeugdaches 2 gewählt werden. Der Deckel 5 weist folglich Abmessungen auf, die denjenigen der Dachöffnung 4 entsprechen.

Der Deckel 5 ist an einer unter dem festen Fahrzeugdach 2 angebrachten Baueinheit 6 (siehe Fig. 2) gelagert, die ein vorderes Rahmenteil 7 und ein hinteres Rahmenteil 8 mit jeweiligen Führungsschienen für den Vorderrand 9 und den Hinterrand 10 des Deckels 5 enthält, so daß der Deckel 5 aus der Dachöffnung 4 in Querrichtung seitlich z. B. unter den bezüglich dem Fahrzeug rechten festen Dachbereich 11 angrenzend an die Dachöffnung 4 bewegbar ist.

An der Baueinheit 6 ist eine Abschattungseinrichtung angeordnet, die beispielsweise eine feste, im wesentlichen lichtundurchlässige Sonnenschutzeinheit 12 und eine teilweise lichtdurchlässige und auch luftdurchlässige Sonnenschutzeinheit 13 enthält, die beispielsweise eine von einem Rahmen umgebene Netzstruktur oder ein gelochtes flächiges Element aufweist. Die beiden Sonnenschutzeinheiten 12 und 13, die als flache plattenförmige Teile gebildet sind, haben in etwa die Größe des Deckels 5 und sind jeweils an ihrem Vorderrand 14 bzw. 14' und an ihrem Hinterrand 15 bzw. 15' an dem vorderen bzw. hinteren Rahmenteil 7 bzw. 8 verschiebbar gelagert, wobei sie in ihrer Außergebrauchstellung jeweils rechts bzw. links des Deckels 5 unter den jeweiligen festen Dachabschnitten 11 bzw. 16 angeordnet sind. Bedarfsweise kann die lichtundurchlässige Sonnenschutzeinheit 12 unter den in der Dachöffnung 4 angeordneten Deckel 5 verschoben werden, wobei sie zusätzlich an einer Führungsschiene 17 gehalten und geführt wird. Die luftdurchlässige Sonnenschutzeinheit 13 ist zum Abdecken der Dachöffnung 4 unter diese verschiebbar, insbesondere auch bei geöffneter Dachöffnung 4, wenn der Deckel 5 aus der Dachöffnung 4 unter den festen Dachabschnitt 11 bewegt ist, und eine dachfeste Führungsschiene 18 bietet der Sonnenschutzeinheit 13 eine zusätzliche Führung.

Ein als Luftleiteinrichtung dienender Windabweiser 19 ist ebenfalls unter dem festen Dachabschnitt 16 gelagert und in einer Querverschiebung in die Dachöffnung 4 verschiebbar, wenn der Deckel 5 in seine Ablagestellung unter den festen Dachabschnitt 11 bewegt ist. Der Windabweiser 19, der z. B. in Form einer geraden oder gepfeilten Lamelle gebildet ist, beeinflußt die über das fahrende Fahrzeug strömende Luftströmung (in Fig. 1 als Pfeil 20 schematisch dargestellt) und leitet diese derart über das Fahrzeugdach 2, daß störender Luftzug an der geöffneten Dachöffnung 4 und damit auch Lärmerzeugung reduziert wird. Der Windabweiser 19 ist entsprechend dem Strömungsprofil am Fahrzeugdach 2 beabstandet vom Vorderrand 22 der Dachöffnung 4 oberhalb der Sonnenschutzeinheit 13 angeordnet, beispielsweise am Ende des ersten Drittels der Länge der Dachöffnung 4, und einerseits an der Führungsschiene 18 mittels einer verschiebbaren Halterung 21 geführt und andererseits an der Sonnenschutzeinheit 13 mittels eines Halteteils 23 befestigt, so daß beim Verschieben der Sonnenschutzeinheit 13 gleichzeitig der Windabweiser 19 verschoben wird. Der Windabweiser 19 kann aus einem transparenten Material hergestellt sein, so daß er keine optische Beeinträchtigung darstellt.

Der Windabweiser 19 kann auch ohne Koppelung mit der Sonnenschutzeinheit 13 nur an der Führungsschiene 18 gelagert sein und damit unabhängig von der Sonnenschutzeinheit 13 bewegbar sein.

Die lange schmale Form der Dachöffnung 4 und des Deckels 5 gestattet einen freien Lichteinfall im wesentlichen in der Fahrzeugmitte zwischen Fahrer und Beifahrer sowie zwischen den beiden Rücksitzen über einen langen Abschnitt des Fahrzeugdaches 2 im Gegensatz zu einem herkömmlichen Deckel mit einer Deckelbreite, die wesentlich größer ist wie die Deckellänge, so daß eine insbesondere auch für die Insassen auf den Rücksitzen angenehme Ausleuchtung des Fahrzeuginnenraumes entsteht. Gleichzeitig wird jedoch der unmittelbare Kopfraum des Fahrers und des Beifahrers bzw. der beiden Insassen auf den Rücksitzen durch die schmale Ausführung der Dachöffnung 4 bzw. des Deckels 5 abgeschattet, so daß direkte Sonneneinstrahlung, die die Insassen blenden könnte und von diesen daher als unangenehm empfunden werden könnte, weitgehend vermieden wird. Bedarfsweise kann durch das Sonnenschutzteil 12 der Lichteinfall durch den transparenten Deckel 5 verhindert oder durch das luftdurchlässige Sonnenschutzteil 13 bei geöffneter Dachöffnung 4 reduziert werden, wobei zusätzlich eine zugfreie Belüftung durch das luftdurchlässige Sonnenschutzteil 13 ermöglicht ist, wenn der Windabweiser 19 in der Dachöffnung 4 positioniert ist.

### Bezugszeichenliste

- 1: Fahrzeug
- 2: Fahrzeugdach
- 3: Windschutzscheibe
- 4: Dachöffnung
- 5: Deckel
- 6: Baueinheit
- 7: vorderes Rahmenteil
- 8: hinteres Rahmenteil
- 9: Vorderrand
- 10: Hinterrand
- 11: fester Dachbereich
- 12: Sonnenschutzeinheit
- 13: Sonnenschutzeinheit
- 14: Vorderrand
- 15: Hinterrand
- 16: fester Dachabschnitt
- 17: Führungsschiene
- 18: Führungsschiene
- 19: Windabweiser
- 20: Luftströmung
- 21: Halterung
- 22: Vorderrand
- 23: Halteteil

## Patentansprüche

1. Fahrzeugdach mit einer Dachöffnung und einem bewegbaren Deckel zum wahlweisen Schließen oder zumindest teilweisen Freigeben der Dachöffnung,
**dadurch gekennzeichnet,**
**daß** der Deckel (5) zur Bewegung in Fahrzeugquerrichtung zwischen seiner Schließstellung in der Dachöffnung (4) und seiner Offenstellung unter einem an die Dachöffnung (4) seitlich angrenzenden Dachabschnitt (11) gelagert ist und
**daß** eine Luftleiteinrichtung (19) in der geöffneten Dachöffnung (4) beabstandet vom Vorderrand (21) der Dachöffnung (4) positionierbar ist.

2. Fahrzeugdach nach Anspruch 1,
**dadurch gekennzeichnet, daß** eine luftdurchlässige Sonnenschutzeinheit (13) aus ihrer Außergebrauchstellung unter einem an die Dachöffnung (4) seitlich angrenzenden Dachabschnitt (16) in die freigelegte Dachöffnung (4) bewegbar ist.

3. Fahrzeugdach nach Anspruch 1 oder 2,
**dadurch gekennzeichnet, daß** die Luftleiteinrichtung (19) ein die Luftströmung leitender insbesondere lamellen- oder schildförmiger Windabweiser (19) ist.

4. Fahrzeugdach nach Anspruch 2 oder 3,
**dadurch gekennzeichnet, daß** die Luftleiteinrichtung (19) mit der Sonnenschutzeinheit (13) verbunden und gemeinsam mit dieser bewegbar ist.

5. Fahrzeugdach nach einem der Ansprüche 1 bis 4,
**dadurch gekennzeichnet, daß** die Luftleiteinrichtung (19) aus transparentem Material hergestellt ist.

6. Fahrzeugdach nach einem der Ansprüche 1 bis 5,
**dadurch gekennzeichnet, daß** die Luftleiteinrichtung (19) in einem festgelegten Abstand vom Vorderrand (21) der Dachöffnung (4), insbesondere nach 1/3 der Länge der Dachöffnung (4), angeordnet ist.

7. Fahrzeugdach nach einem der Ansprüche 1 bis 6,
**dadurch gekennzeichnet, daß** die Luftleiteinrichtung (19) in ihrer Neigung zum Beeinflussen der Luftströmung einstellbar ist.

8. Fahrzeugdach nach einem der Ansprüche 1 bis 7,
**dadurch gekennzeichnet, daß** die Luftleiteinrichtung (19) an einer Führungsschiene (18) verschiebbar gelagert ist.

9. Fahrzeugdach nach einem der Ansprüche 1 bis 8,
**dadurch gekennzeichnet, daß** die Sonnenschutzeinheit (13) eine luftdurchlässige Netzstruktur aufweist.

10. Fahrzeugdach nach einem der Ansprüche 1 bis 9,
**dadurch gekennzeichnet, daß** die Länge der Dachöffnung (4) größer ist wie ihre Breite und zumindest das Zweifache und insbesondere das Dreibis Vierfache ihrer Breite beträgt.

11. Fahrzeugdach nach einem der Ansprüche 1 bis 10,
**dadurch gekennzeichnet, daß** eine in Querrichtung bewegbare zusätzliche Sonnenschutzeinheit (12) aus ihrer Außergebrauchstellung unter dem seitlichen Dachabschnitt (11) unter den in der Dachöffnung (4) angeordneten transparenten Deckel (5) verschiebbar ist.

12. Fahrzeugdach nach Anspruch 11,
**dadurch gekennzeichnet, daß** die beiden Sonnenschutzeinheiten (12 und 13) an einer Baueinheit (6) rechts bzw. links der Dachöffnung (4) in Außergebrauchstellung gelagert sind.
